# FASCICULE DE BREVET EUROPEEN

(11) **EP 1 360 781 B1**
(45) Date de publication et mention de la délivrance du brevet: **19.09.2012**
(21) Numéro de dépôt: 02701395.2
(22) Date de dépôt: 04.02.2002
(51) Int. Cl.: H04B 7/185

(54) **SATELLITE A LIAISON DE TELEMESURE, SUIVI ET TELECOMMANDE**
ABSTANDS-MESSVORRICHTUNG, FOLGUNG UND STEUERUNG FÜR SATELLITEN
TELEMETRY, TRACKING AND COMMAND SATELLITE LINK

(30) Priorité: 08.02.2001 FR 0101706
(43) Date de publication de la demande: 12.11.2003
(73) Titulaire: Thales, 92 Neuilly sur Seine (FR)
(72) Inventeur: NASTA, Rodolphe, F-31100 Toulouse (FR); TONELLO, Emile, F-31470 St Lys (FR); CHALLAMEL, Remi, F-31000 Toulouse (FR)
(74) Mandataire: Esselin, Sophie
(86) Numéro de dépôt international: PCT/FR2002/000411
(87) Numéro de publication internationale: WO 2002/063797

(56) Documents cités:
- US-A- 5 153 598
- US-A- 5 708 966
- US-A- 5 995 040
- WADNER P J ET AL: "TTC SUBSYSTEM FOR THE OLYMPUS SPACECRAFT" JOURNAL OF THE BRITISH INTERPLANETARY SOCIETY,GB,BRITISH INTERPLANETARY SOCIETY. LONDON, vol. 41, no. 7, 1 juillet 1988 (1988-07-01), pages 319-324, XP000100833 ISSN: 0007-084X
- BERNER J B ET AL: "The NASA spacecraft transponding modem" 2000 IEEE AEROSPACE CONFERENCE. PROCEEDINGS (CAT. NO.00TH8484), 2000 IEEE AEROSPACE CONFERENCE PROCEEDINGS, BIG SKY, MT, USA, 18-25 MARCH 2000, pages 195-209 vol.7, XP002167267 2000, Piscataway, NJ, USA, IEEE, USA ISBN: 0-7803-5846-5
- M. RICHMARIA: "Satellite Communication Systems" 10 mars 1999 (1999-03-10) , MACMILLAN PRESS LTD , LONDON XP002167268 235030 page 299 -page 304
- M. OTTER: "Spread-Spectrum Multiple Access for Spacecraft Service Functions (TT&C)" ESA JOURNAL, vol. 10, no. 1, 1986, pages 277-290, XP000994602

## Description

L'invention concerne les satellites, et plus précisément la liaison de télémesure, télécommande et mesure de distance entre les stations au sol et un satellite. Cette liaison est plus couramment appelée liaison TTC, acronyme de l'anglais Telemetry, Tracking and Command, en français télémesure, poursuite et télécommande; ou liaison TCR, pour l'anglais Telemetry, Command et Ranging, en français télémesure, télécommande et mesure de distance. Une telle liaison doit être établie de façon très fiable durant toutes les phases de la vie d'un satellite; on peut globalement distinguer quatre phases:
- une phase de mise à poste, qui correspond à la période depuis l'injection par le lanceur jusqu'au ralliement de la position définitive du satellite;
- une phase de maintien à poste, qui correspond à la phase d'opération nominale du satellite;
- une phase de secours, le cas échéant, qui correspond à une panne et pendant laquelle l'altitude du satellite peut être modifiée ; et
- une phase de désactivation ou déorbitation, au cours de laquelle le satellite est envoyé sur une orbite dite cimetière.

Cette liaison est utilisée :
- d'une part pour la télécommande du satellite (envoi de consignes destinées à être exécutées à bord), depuis la Terre, notée dans la suite TC
- d'autre part pour la télémesure, c'est-à-dire pour la transmission depuis le satellite d'informations sur l'état de l'engin (contrôle technologique, compte-rendu d'exécution des télécommandes, données d'attitude, ...).. On note TM dans la suite la télémesure.

Il est aussi avantageux d'utiliser pour la mesure de distance station sol-satellite les mêmes porteuses que la Télécommande et la Télémesure.

Il a été proposé d'utiliser pour la liaison TTC d'un satellite une modulation avec sous-porteuse ; cette solution est utilisée sur les satellites export, et pour bon nombre de satellites d'agences spatiales. Il a encore été proposé dans ce cas d'utiliser le résidu de porteuse du signal télémesure pour la mission télécommunication comme signal de balise ; ce signal sert alors d'aide au pointage des stations sol. On peut par exemple utiliser une modulation BPSK/FM ou BPSK/PM en voie montante et une modulation BPSK/PM en voie descendante ; on utilise ici la notation classique, en indiquant avant la barre de fraction la modulation appliquée à la sous-porteuse, et après cette barre de fraction la modulation appliquée à la porteuse. La modulation BPSK est une modulation par déplacement de phase à deux états, acronyme de l'anglais "binary phase shift keying". FM et PM désignent respectivement une modulation de fréquence et une modulation de phase.

Lorsque l'on utilise une telle modulation à sous-porteuse, une solution connue pour la mesure de distance est la suivante : le sol émet des tons (sinusoïde pure) modulant la porteuse montante de la liaison de télécommande. Ces tons sont démodulés à bord puis re-modulent sur la voie descendante la porteuse de télémesure, simultanément avec la sous-porteuse télémesure. La mesure de distance se déduit du déphasage mesuré sur le ton de plus haute fréquence (dit ton majeur), et la levée d'ambiguïté s'effectue avec les tons dits mineurs qui sont déduits du ton majeur par progression géométrique ; le standard ESA propose ainsi une progression géométrique de rang 1/5.

Une telle modulation à sous-porteuse souffre des inconvénients suivants : d'une part, la modulation n'est pas performante en termes de résistance au brouillage ; d'autre part, cette modulation est peu adaptée à la co-localisation; cette co-localisation consiste à localiser plusieurs satellites en utilisant la même bande de fréquence. C'est notamment le cas pour les signaux TC en BPSK/FM; ces signaux sont utilisés massivement à l'export, et présentent une largeur de bande importante - environ 800 kHz pour une modulation FM d'excursion +/-400 kHz. La co-localisation de plusieurs satellites nécessite de multiplier cette largeur de bande (augmentée de la bande imposée par la sélectivité des récepteurs TC) par le nombre de satellites. La co-localisation de plusieurs satellites peut de ce fait nécessiter une bande de fréquence plus importante que celle proposée dans les plans de fréquence satellite. Ainsi, pour une constellation de 11 satellites, une co-localisation utilisant une modulation TC FM à sous porteuse nécessiterait une bande de fréquence d'environ 15 MHz en prenant en compte la sélectivité classique des récepteurs TC.

Il est encore connu d'utiliser pour la liaison TTC d'un satellite une modulation à étalement de spectre ; cette solution est notamment mise en oeuvre par les utilisateurs de satellites de relais de données ou DRS (Data Relay Satellites), pour les applications militaires, pour la navette spatiale ou encore pour la liaison de commande de destruction du lanceur Ariane.

La modulation à étalement de spectre est connue en soi, et est par exemple décrite dans les ouvrages de J. H. Holmes, Coherent Spread Spectrum Systems, ou de Kamilo Feher, Wireless Digital Communications (Modulation and Spread Spectrum Applications). Les techniques d'étalement de spectre permettent de définir plusieurs canaux logiques sur un seul canal physique, correspondant à une fréquence porteuse et à une bande passante données. Les plus connues parmi ces techniques sont :
- l'étalement de spectre par séquence directe, en anglais Direct Sequence Spread Spectrum, qui inclut l'AMRC, ou accès multiple à répartition de code, en anglais CDMA ou Code Division Multiple Access;
- l'étalement de spectre par saut de fréquence, ou FH pour l'anglais Frequency Hopping, qui inclut aussi le CDMA;
- l'étalement de spectre par accès multiple à détection de porteuse, ou CSMA de l'anglais Carrier Sense Multiple Access.

On appelle dans les systèmes à étalement de spectre "bit" l'information binaire transmise sur un canal, et "bribe" ou en langue anglaise "chip" l'information binaire associée à la séquence pseudo-aléatoire. Ces techniques utilisent des codes pseudo-aléatoires appelés le plus souvent codes PN (acronyme de l'anglais Pseudo-noise). Les codes PN sont choisis sur des critères liés à leurs fonctions d'autocorrélation ou d'intercorrélation, afin qu'un récepteur ne décode que le signal qui lui est destiné, avec en outre un éventuel signal d'interférence dépendant du nombre d'utilisateurs et des propriétés des codes.

Dans le cadre du standard spectre étalé mis en place par les agences spatiales pour la liaison TTC, on transmet simultanément en UQPSK pour la voie montante le signal TC étalé par un code Gold de longueur 1023 sur la voie 1 est le signal de mesure de distance qui est un code PN long (1023*256) sur la voie Q; ces voies I et Q correspondent à la décomposition du signal complexe suivant deux axes orthogonaux. Le code de mesure de distance est ensuite réémis sur la liaison télémesure. La mesure de distance se déduit du retard mesuré au sol sur le code de mesure de distance renvoyé par le satellite.

Une liaison TTC à modulation par étalement de spectre est plus résistante au brouillage qu'une liaison TTC à modulation par sous-porteuse; par ailleurs, le problème de la co-localisation ou de l'importance de la bande de fréquence nécessaire pour cette co-localisation ne se pose pas de façon aussi cruciale : il suffit en effet d'affecter des codes PN différents aux différents satellites. Une liaison TTC à spectre étalée présente toutefois les inconvénients suivants. Tout d'abord, elle est coûteuse à mettre en oeuvre dans la mesure où elle implique une modification des standards utilisant une modulation par sous-porteuse; ensuite, pour la liaison descendante, cette solution présente l'inconvénient :
- de ne plus permettre d'utiliser le résidu de porteuse télémesure comme balise télécommunication - comme ceci est le cas dans les systèmes actuels;
- de ne pas offrir une solution performante pour la co-localisation, dans la mesure où les solutions CDMA sont très sensibles à l'équilibre des puissances émises entre utilisateurs, et que cet équilibre est délicat à mettre en oeuvre sur la liaison descendante.

Ce problème d'équilibrage des puissances en co-localisation est moins sensible sur la liaison montante, pour laquelle le sol peut ajuster en permanence les niveaux émis, alors que pour la liaison descendante, la puissance émise est constante sur toute la durée de vie du satellite, et dépend de la conception du satellite; ceci rend difficile d'homogénéiser toute une flotte de satellites.

Il existe donc un besoin d'une liaison TTC pour les satellites, qui soit résistante au brouillage, qui permette une co-localisation, qui puisse être mise en oeuvre facilement dans les systèmes existants, et qui soit enfin aussi compatible que possible avec les systèmes terrestres existants.

En conséquence, l'invention propose dans un mode de réalisation un procédé de transmission de signaux sur la liaison télémesure, poursuite et télécommande d'un satellite, comprenant:
- la transmission de signaux de télécommande et de signaux de mesure de distance, avec une modulation en spectre étalé, sur la liaison de télécommande depuis la Terre vers le satellite;
- la transmission de signaux de télémesure et de signaux de mesure de distance, avec une modulation à sous-porteuse, sur la liaison de télémesure depuis le satellite vers la Terre.

De préférence, la transmission de signaux de télécommande et de signaux de mesure de distance s'effectue sur la même porteuse; de même, la transmission de signaux de télémesure et de signaux de mesure de distance peut s'effectuer sur la ou les mêmes porteuses,

Dans un mode de réalisation, la transmission avec modulation en spectre étalé comprend:
- la transmission des signaux de télécommande par étalement à l'aide d'un premier code;
- la transmission d'un signal de mesure de distance par étalement à l'aide d'un deuxième code.

Il est alors avantageux que la longueur du deuxième code soit un multiple de la longueur du premier code.

Dans un autre mode de réalisation, la transmission avec une modulation à sous-porteuse comprend la modulation de la porteuse par une ou plusieurs sous-porteuses et par une pluralité de tons de mesure de distance.

Il est encore possible que le procédé comprenne:
- la réception dans le satellite du signal de mesure de distance étalé à l'aide du deuxième code; et
- la modulation par le satellite de la porteuse télémesure qui est modulée par la sous-porteuse télémesure et par une pluralité de tons fonctions du signal de mesure de distance reçu.

De préférence, la modulation en spectre étalé est une modulation UQPSK étalé par un code de Gold. La modulation à sous-porteuse peut être une modulation PSK/PM.

L'invention propose encore un satellite présentant
- un circuit de réception de signaux de tétécommande modulés en spectre étalé et de signaux de mesure de distance modulés en spectre étalé, et
- un circuit d'émission de signaux de télémesures modulés avec sous-porteuse et de signaux de mesure de distance modulés ovec sous-porteuse.

Le circuit de réception présente avantageusement:
- une voie de réception de signaux de télécommande étalés par un premier code d'étalement; et
- une voie de réception de signaux de mesure de distance étalés par un deuxième code d'étalement.

Dans ce cas, il est avantageux que le deuxième code présente une longueur multiple du premier code, et que la voie de réception des signaux de mesure de distance soit commandée par la voie de réception des signaux de télécommande.

Dans un autre mode de réalisation, le circuit d'émission émet un signal de mesure de distance. Dans ce cas, le satellite peut présenter un circuit de liaison reliant le circuit de réception et le circuit d'émission, et le signal de mesure de distance peut être émis par le circuit d'émission en fonction des signaux reçus sur la voie de réception de signaux de mesure de distance.

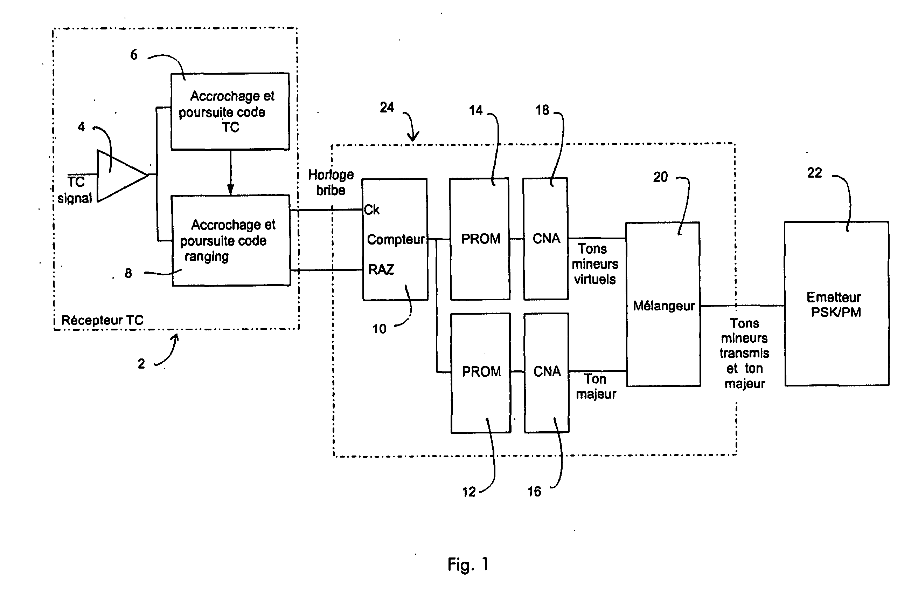

D'autres caractéristiques et avantages de l'invention apparaîtront à la lecture de la description qui suit de modes de réalisation de l'invention, donnée à titre d'exemple uniquement, et en référence aux dessins annexés, dont la figure unique montre un schéma de principe d'une partie d'un satellite selon un mode de réalisation de l'invention.

L'invention propose, pour la liaison TTC d'un satellite, d'utiliser pour la liaison montante de télécommande une modulation à spectre étalé, et d'utiliser pour la liaison descendante une modulation à sous-porteuse. L'utilisation d'une liaison de télécommande à spectre étalé permet de résoudre les problèmes de brouillage et les limitations à la co-localisation que pose la modulation à sous-porteuse; l'utilisation d'une liaison de télémesure à sous-porteuse permet de limiter les modifications par rapport aux standards existants : en effet, par rapport à une liaison TTC à modulation de sous-porteuse en TC et en TM, la solution proposée minimise les coûts liés à l'évolution du standard, dans la mesure où seule une liaison sur deux est modifiée. L'utilisation sur la liaison TM d'une modulation à sous-porteuse permet de continuer à utiliser le résidu de porteuse de télémesure comme balise de télécommunications, comme dans les systèmes actuels. Enfin, l'utilisation sur la liaison TM d'une modulation à sous-porteuse permet d'utiliser les équipements terrestres en place, et notamment les réseaux de mise à poste pour la liaison télémesure.

Pour les signaux de mesure de distance, l'invention propose d'utiliser, sur la liaison montante comme sur la liaison descendante, les modulations et les porteuses respectivement utilisées pour les signaux de télécommande et de télémesure.

La solution proposée va à l'encontre de l'enseignement de l'état de la technique, dans lequel les liaisons TTC utilisent la même modulation pour la télécommande et pour la télémesure; rien non plus ne suggère dans l'état de la technique une combinaison de modulations différentes - d'autant que les solutions de mesure de distance pour les liaisons TTC à modulation en spectre étale ou en sous-porteuse sont très différentes.

La solution proposée s'avère toutefois viable et intéressante; en effet, du point de vue du brouillage, un brouillage TC est bien plus grave qu'un brouillage TM : dans le premier cas, on peut craindre une fausse commande satellite aux conséquences pouvant être gravissimes. Dans le second cas, il y a perte momentanée de l'observabilité satellite. En outre, une liaison TC est bien plus sujette au brouillage qu'une liaison TM : en effet, la couverture TC d'un satellite à poste est dans le meilleur des cas la couverture de communication, avec donc réception possible d'un grand nombre de brouilleurs (intentionnels ou maladroits). La réception du signal télémesure est en revanche effectuée la plupart du temps avec une antenne sol de grand gain, donc de largeur de faisceau très faible, avec pour conséquence une immunité aux satellites brouilleurs adjacents. De la sorte, utiliser une modulation à sous-porteuse sur la liaison de télémesure est une solution viable malgré le problème du brouillage; la solution proposée plus haut permet de limiter les conséquences du brouillage sur la liaison de télécommande, et donc d'assurer que les commandes sont bien transmises au satellite.

Pour ce qui est de la co-localisation, le spectre du signal de télécommande export BPSK/FM mentionné plus haut se prête naturellement peu à un FDMA efficace (français AMRF accès multiple à répartition de fréquences) du fait de la largeur de son spectre. Un signal télémesure BPSK/PM est de spectre étroit - environ 150 kHz - et se prête bien mieux à un FDMA efficace, d'autant plus que le filtrage pour séparer les signaux TM des différents satellites co-localisés est effectué au sol, où les techniques de filtrage performantes sont bien moins coûteuses qu'à bord du satellite. L'utilisation d'une modulation à spectre étalé sur la liaison de télécommande permet d'éviter le problème de largeur du spectre dans le cas d'une pluralité de satellites; ce problème, comme expliqué à l'instant, se pose moins sur la liaison de télémesure, de spectre plus étroit.

Enfin, c'est lorsqu'un satellite est en orbite de dérive que le risque que les stations sol de ce satellite ne brouillent un autre satellite est le plus fort : la conséquence est la perte de commandabilité tant que le satellite qui dérive est à proximité du satellite brouillé. La mise en oeuvre d'une liaison de télécommande en spectre étalé peut aider à résoudre ce problème; le cas échéant, la solution peut être complétée par un déploiement d'antenne de communication sur le satellite en orbite de dérive afin de pouvoir abaisser le flux de télécommande de la station sol qui lui est associé.

Un satellite mettant en oeuvre ce mode de réalisation de l'invention présente donc un circuit de réception de signaux de télécommande modulés en spectre étalé, et un circuit d'émission de signaux de télémesure modulés avec une sous-porteuse.

On décrit maintenant un exemple de mise en oeuvre de l'invention. Dans l'exemple, on utilise pour la modulation en spectre étalé une modulation UQPSK; les bits modulés du signal télécommande (voie I) sont étalés par un code de Gold d'une longueur de 1023.Le rythme des bribes est de 500 kcycles/s. On transmet aussi sur la liaison de télécommande un signal de mesure de distance (voie Q), qui corresponde à un code PN de mesure de distance d'une longueur N*1023 multiple de 1023. Le rythme de bribe est identique à celui utilisé pour la transmission des signaux de télécommande.. Choisir pour le signal de mesure de distance un code présentant une longueur multiple du code utilisé pour l'étalement des signaux de télécommande permet de simplifier l'accrochage et la poursuite sur le code de mesure de distance : une fois le premier code accroché, il suffit de tester N positions pour le code long et non plus N*1023; bien entendu, ceci suppose que les positions relatives des deux codes soient connues, et par exemple que le deuxième code commence en même temps que le premier code.

La longueur du code d'étalement pour les signaux de mesure de distance est choisie en fonction du besoin en levée d'ambiguïté; de fait, la mesure de distance s'effectue en mesurant le décalage provoqué par la propagation des codes; cette mesure s'effectue modulo la longueur du code. On obtient ainsi plusieurs positions possibles du satellite - dont seule l'une correspond à la position réelle du satellite : plus le code est long, plus la distance entre deux positions possibles du satellite est importante. La longueur du code dépend de la levée d'ambiguïté maximale requise, c'est-à-dire la distance qui peut être acceptée entre les positions possibles du satellite fournies par la mesure de distance. Dans la pratique et pour des satellites géostationnaires, une levée d'ambiguïté maximale de 5000 km peut suffire; la longueur du code est choisie de telle sorte que la position du satellite obtenue par la mesure de distance soit obtenue modulo une distance supérieure ou égale à 5000 km. Dans l'exemple d'un code d'une longueur multiple de 1023, et pour un rythme bribe de 500 kcycles/s, une longueur de 17*1023 suffit.

On utilise pour la modulation à sous-porteuse une modulation PSK/PM. Pour la mesure de distance, on peut utiliser comme proposé dans l'état de la technique une modulation de la porteuse de télémesure, simultanément avec la sous-porteuse de télémesure, avec des tons choisis conformément au standard proposé par l'ESA :
- ton majeur à 100 kHz;
- tons mineurs virtuels en progression géométrique de rang 1/5 par rapport au ton majeur (20 000 Hz, 4000 Hz, 800 Hz, 160 Hz, 32 Hz, 8 Hz);
- tons mineurs transmis obtenus par mélange avec d'autres tons mineurs (20 000 Hz, 16 000 Hz, 16 800 Hz, 16 160 Hz, 16 032 Hz, 16 008 Hz)

Ce choix permet une mesure de distance par mesure du déphasage du ton majeur, avec une levée d'ambiguïté grâce aux tons mineurs; l'exemple de progression géométrique de rapport 1/5 conduit à une levée d'ambiguïté maximale de l'ordre de 18000 km. Les tons mineurs virtuels ne sont pas facilement transmissibles, notamment ceux de plus basse fréquence; le mélange avec d'autres tons permet de remonter la fréquence des tons mineurs pour leur transmission sur la voie descendante.

La figure montre un schéma de principe d'une partie d'un satellite; n'est représentée à la figure que la partie du satellite qui permet de recevoir le code PN de mesure de distance transmis sur la liaison de télécommande et de transmettre le signal de mesure de distance sur la liaison de télémesure en modulant la porteuse et la sous-porteuse.

La figure montre d'abord une vue partielle du récepteur 2 de la liaison de télécommande. Celui-ci comprend en entrée une chaîne de traitement radiofréquence 4 amplifiant et assurant la conversion en fréquence des signaux transmis depuis la Terre et reçus sur une antenne non représentée; les signaux amplifiés et convertis en fréquence sont transmis à un circuit 6 d'accrochage et de poursuite du code d'étalement utilisé pour les signaux de télécommande (ou premier code); en parallèle, les signaux amplifiés sont transmis à un circuit 8 d'accrochage et de poursuite du code d'étalement utilisé pour les signaux de mesure de distance (ou deuxième code); comme expliqué plus haut, dans la mesure où la longueur du deuxième code est un multiple de la longueur du premier code, et dans la mesure où la longueur des bribes est la même, l'accrochage sur le premier code peut simplifier l'accrochage sur le deuxième code. La flèche reliant le circuit d'accrochage 6 et le circuit d'accrochage 8 symbolise cette utilisation de l'accrochage sur le premier code pour simplifier l'accrochage sur le deuxième code. Le circuit de réception 2 présente ainsi deux voies, d'une part pour les signaux de télécommande étalés par le premier code, et d'autre part pour les signaux de mesure de distance étalés par le deuxième code.

Les signaux fournis par le circuit d'accrochage 6 sont utilisés de manière connue en soi, pour la démodulation des signaux de télécommande. Un compteur de bribes 10 reçoit sur une entrée de comptage les signaux d'horloge de bribe fournis par le circuit d'accrochage et de poursuite 8; une entrée de remise à zéro du compteur de bribes 10 reçoit aussi un signal provenant du circuit d'accrochage et de poursuite 8.Ce signal de remise à zéro est appliqué au compteur de bribes par le circuit d'accrochage et de poursuite au début du deuxième code. Le compteur compte jusqu'à un nombre égal à la longueur du deuxième code avant de subir une nouvelle remise à zéro au début du code suivant.

De la sorte, le compteur de bribes 10 compte les bribes du deuxième code reçues depuis la Terre sur la liaison montante. La sortie du compteur de bribes 10 est appliquée à l'entrée d'adresse de deux mémoires PROM 12 et 14. Chacune de ces deux mémoires agit comme table de donnée pour les tons de mesure de distance; plus précisément, la PROM 12 contient les données correspondant aux différentes phases du ton majeur, tandis que la PROM 14 contient les données correspondant aux différentes phases des tons mineurs virtuels. On obtient ainsi sur la sortie de lecture des PROM 12 et 14 des signaux numériques représentatifs du ton majeur et des tons mineurs, qui sont en phase avec les bribes reçues sur la voie montante de mesure de distance.

Les signaux provenant des PROM 12 et 14 sont respectivement appliqués à des convertisseurs numériques analogiques 16 et 18. Le premier convertisseur fournit donc en sortie un ton majeur déphasé en fonction du deuxième code reçu; le deuxième convertisseur fournit donc en sortie les tons mineurs virtuels pouvant aller dans l'exemple de 8 Hz à 20 kHz. Les tons fournis par les deux convertisseurs 16 et 18 sont appliqués à un ensemble de mélangeurs 20. Les mélangeurs mélangent les tons mineurs virtuels, par exemple avec un ton mineur à 16kHz, de sorte à fournir en sortie le ton majeur et les tons mineurs réels mentionnés plus haut.

La sortie du mélangeur 20 est appliquée à un émetteur PSK/PM pour l'envoi en même temps que les signaux de télémesure des signaux de mesure de distance.

A l'arrivée, la mesure de distance s'effectue avec le ton majeur; celui-ci fournit une précision de mesure de l'ordre de 10 m dans des conditions de bilan de liaison nominale, pour des performances standard d'équipements bord et sol et pour une analyse de phase avec une précision de 0.2°; toutefois, l'ambiguïté est de l'ordre de 1,5 km; les tons mineurs, qui sont envoyés séquentiellement avec le ton majeur ou simultanément, permettent de lever cette ambiguïté.

Diverses possibilités sont envisageables pour la levée d'ambiguïté à l'aide des tons mineurs; chaque ton mineur peut être envoyé séquentiellement à un rythme convenu - par exemple, on change de ton mineur au début de chaque nouveau deuxième code. On peut aussi synchroniser depuis le sol le changement de tons mineurs : on peut par exemple cesser d'envoyer le deuxième code sur la voie montante et programmer le dispositif pour qu'il change de ton mineur à chaque interruption dans l'envoi du deuxième code. On peut aussi utiliser deux deuxièmes codes, un premier de ces deuxièmes codes déclenchant les changements de tons mineurs, un second de ces deuxièmes codes conservant le ton mineur en cours. D'une façon ou d'une autre, on utilise séquentiellement les différents tons mineurs, pour assurer une levée d'ambiguïté sur la position du satellite.

Le circuit de la figure n'est qu'un exemple d'un circuit permettant de générer les tons utilisés sur la voie descendante pour la modulation de la porteuse télémesure, en fonction de la réception du deuxième code sur la voie montante. Le satellite présente ainsi un circuit 2 de réception de signaux de télécommande modulés en spectre étalé, un circuit d'émission 22 de signaux de mesure de distance modulant la porteuse télémesure, ainsi qu'un circuit de liaison 24 entre ces deux derniers, qui permet de moduler la porteuse télémesure en fonction du signal de mesure de distance reçu. Dans l'exemple de la figure le circuit de liaison 24 est composé du compteur 10, des tables de données 12 et 14, des convertisseurs 16 et 18 et du mélangeur 20.

Bien entendu, la présente invention n'est pas limitée aux exemples et modes de réalisation décrits et représentés, mais elle est susceptible de nombreuses variantes accessibles à l'homme de l'art. Ainsi, elle peut être mise en oeuvre pour un seul satellite - et dans ce cas le problème de la co-localisation ne se pose manifestement pas. La solution proposée s'applique non seulement à la technique d'étalement par séquence directe donnée à titre d'exemple, mais aussi à d'autres techniques d'étalement de spectre.

On a donné dans les exemples des modulations qui correspondent sensiblement aux différents standards existants; ce choix des modulations permet de limiter les modifications à apporter aux équipements terrestres et satellite; on peut aussi utiliser des modulations en spectre étalé et à sous-porteuse différentes de celles proposées plus haut. En particulier, il n'est pas indispensable d'utiliser un code d'étalement des signaux de mesure de distance sur la voie de télécommande qui présente une longueur multiple de la longueur du code d'étalement des signaux de télécommande; ceci complique simplement l'accrochage pour les signaux de mesure de distance.

On peut aussi simplifier le montage de la figure; ainsi, en fonction du nombre n retenu, une simple division de l'horloge bribe à 500 kHz suivi d'un filtrage peut permettre de restituer un ton majeur. Ce ton peut alors présenter une valeur différente de 100 kHz. Cette solution peut aussi s'appliquer aux tons mineurs, avec différents rapports de division, et en fonction du rapport de longueur N entre le deuxième code et le premier code; on pourrait aussi utiliser des boucles à verrouillage de phase pour obtenir les tons utilisés dans la voie descendante.

Pour ce qui est des tons mineurs, des solutions sont possibles pour éviter le problème des basses fréquences, autres que le mélange des tons mineurs. On pourrait ainsi moduler une sous-porteuse, par exemple autour de 10 à 20 kHz en modulation de fréquence par les tons mineurs de basse fréquence. Cette solution, comme celle qui est proposée plus haut, permet de transmettre les tons mineurs, indépendamment de leur fréquence.

Une autre variante du circuit de la figure consiste à remplacer le compteur par un accumulateur, dont le rôle est de sommer une valeur appelée incrément à chaque coup d'horloge. L'horloge d'intégration est l'horloge bribe de la voie montante : on peut alors changer de fréquence de ton de mesure de distance par simple changement de l'incrément de l'accumulateur.

## Revendications

1. Procédé de transmission de signaux sur la liaison télémesure, poursuite et télécommande d'un satellite, comprenant:
- la transmission de signaux de télécommande et de signaux de mesure de distance, avec une modulation en spectre étalé, sur la liaison de télécommande depuis la Terre vers le satellite;
- la transmission de signaux de télémesure et de signaux de mesure de distance, avec une modulation à sous-porteuse, sur la liaison de télémesure depuis le satellite vers la Terre.

2. Le procédé selon la revendication 1, **caractérisé en ce que** la transmission de signaux de télécommande et de signaux de mesure de distance s'effectue sur la même porteuse,

3. Le procédé selon la revendication 1 ou 2, **caractérisé en ce que** la transmission de signaux de télémesure et de signaux de mesure de distance s'effectue sur la ou les mêmes porteuses,

4. Le procédé de la revendication 1, 2 ou 3, **caractérisé en ce que** la transmission avec modulation en spectre étalé comprend:
- la transmission des signaux de télécommande par étalement à l'aide d'un premier code;
- la transmission d'un signal de mesure de distance par étalement à l'aide d'un deuxième code

5. Le procédé de la revendication 4, **caractérisé en ce que** la longueur du deuxième code est un multiple de la longueur du premier code.

6. Le procédé de l'une des revendications 1 à 5, **caractérisé en ce que** la transmission avec une modulation à sous-porteuse comprend la modulation de la porteuse par une ou plusieurs sous-porteuses et par une pluralité de tons de mesure de distance.

7. Le procédé des revendications 4 et 6, **caractérisé en ce qu'**il comprend
- la réception dans le satellite du signal de mesure de distance étalé à l'aide du deuxième code; et
- la modulation par le satellite de la porteuse télémesure qui est modulée par la sous-porteuse télémesure et par une pluralité de tons fonction du signal de mesure de distance reçu.

8. Le procédé de l'une des revendications 1 à 7, **caractérisé en ce que** la modulation en spectre étalé est une modulation UQPSK étalé par un code de Gold.

9. Le procédé de l'une des revendications 1 à 8, **caractérisé en ce que** la modulation à sous-porteuse est une modulation PSK/PM.

10. Un satellite présentant
- un circuit de réception (2) de signaux de télécommande modulés en spectre étalé et de signaux de mesure de distance modulés en spectre étalé, et
- un circuit d'émission (22) de signaux de télémesures modulés avec sous-porteuse et de signaux de mesure de distance modulés avec sous-porteuse.

11. Le satellite de la revendication 10, **caractérisé en ce que** le circuit de réception (2) présente :
- une voie de réception de signaux de télécommande étalés par un premier code d'étalement; et
- une voie de réception de signaux de mesure de distance étalés par un deuxième code d'étalement.

12. Le satellite de la revendication 11, **caractérisé en ce que** le deuxième code présente une longueur multiple du premier code, et **en ce que** la voie de réception des signaux de mesure de distance est commandée par la voie de réception des signaux de télécommande.

13. Le satellite de la revendication 10, 11 ou 12, **caractérisé en ce que** le circuit d'émission émet un signal de mesure de distance.

14. Le satellite de la revendication 12, **caractérisé en ce qu'**il présente un circuit de liaison (24) reliant le circuit de réception (2) et le circuit d'émission (22), et **en ce que** le signal de mesure de distance est émis par le circuit d'émission en fonction des signaux reçus sur la voie de réception de signaux de mesure de distance.

## Claims

1. A method for transmitting signals over the telemetry, tracking and telecommand link of a satellite, that comprises:
- transmitting telecommand signals and ranging signals, with spread spectrum modulation, over the telecommand link from the earth to the satellite;
- transmitting telemetry signals and ranging signals, with sub-carrier modulation, over the telemetry link from the satellite to the earth.

2. The method according to claim 1, **characterised in that** the telecommand signals and ranging signals are transmitted on the same carrier.

3. The method according to claim 1 or 2, **characterised in that** the telemetry signals and ranging signals are transmitted on one or more same carriers.

4. The method according to claim 1, 2 or 3, **characterised in that** transmitting with spread spectrum modulation includes :
- transmitting telecommand signals by spreading using a first code;
- transmitting a ranging signal by spreading using a second code.

5. The method according to claim 4, **characterised in that** the length of the second code is a multiple of the length of the first code.

6. The method according to any one of claims 1 to 5, **characterised in that** transmitting with sub-carrier modulation includes modulating the carrier by one or more sub-carriers and by a plurality of ranging tones.

7. The method according to claims 4 and 6, **characterised in that** it comprises:
- the satellite receiving the ranging signal that is spread using the second code; and
- the satellite modulating the telemetry carrier that is modulated by the telemetry sub-carrier and by a plurality of tones as a function of the received ranging signal.

8. The method according to any one of claims 1 to 7, **characterised in that** the spread spectrum modulation is a UQPSK modulation that is spread by a Gold code.

9. The method according to any one of claims 1 to 8, **characterised in that** the sub-carrier modulation is a PSK/PM modulation.

10. A satellite having:
- a circuit (2) for receiving spread spectrum modulated telecommand signals and spread spectrum modulated ranging signals, and
- a circuit (22) for emitting sub-carrier modulated telemetry signals and sub-carrier modulated ranging signals.

11. The satellite according to claim 10, **characterised in that** the receiving circuit (2) has:
- a channel for receiving telecommand signals that are spread by a first spreading code; and
- a channel for receiving ranging signals that are spread by a second spreading code.

12. The satellite according to claim 11, **characterised in that** the length of the second code is a multiple of that of the first code, and **in that** the channel for receiving the ranging signals is controlled by the channel for receiving the telecommand signals.

13. The satellites according to claim 10, 11 or 12, **characterised in that** the emitting circuit emits a ranging signal.

14. The satellite according to claim 12, **characterised in that** it has a connection circuit (24) that connects the receiving circuit (2) and the emitting circuit (22), and **in that** the ranging signal is emitted by the emitting circuit as a function of the signals received over the channel for receiving ranging signals.

## Patentansprüche

1. Verfahren zum Übertragen von Signalen auf der Telemetrie-, Verfolgungs- und Fernsteuerverbindung eines Satelliten, das Folgendes beinhaltet:
- Übertragen von Fernsteuersignalen und von Entfernungsmesssignalen mit einer Spreizspektrumsmodulation auf der Fernsteuerverbindung von der Erde zum Satelliten;
- Übertragen von Telemetriesignalen und Entfernungsmesssignalen mit einer Subträgermodulation auf der Telemetrieverbindung vom Satelliten zur Erde.

2. Verfahren nach Anspruch 1, **dadurch gekennzeichnet, dass** das Übertragen von Fernsteuersignalen und Entfernungsmesssignalen auf demselben Träger erfolgt.

3. Verfahren nach Anspruch 1 oder 2, **dadurch gekennzeichnet, dass** das Übertragen von Telemetriesignalen und Entfernungsmesssignalen auf dem- oder denselben Träger(n) erfolgt.

4. Verfahren nach Anspruch 1, 2 oder 3, **dadurch gekennzeichnet, dass** das Übertragen mit Spreizsprektrumsmodulation Folgendes beinhaltet:
- Übertragen von Fernsteuersignalen durch Spreizen mit einem ersten Code;
- Übertragen eines Entfernungsmesssignals durch Spreizen mit einem zweiten Code.

5. Verfahren nach Anspruch 4, **dadurch gekennzeichnet, dass** die Länge des zweiten Codes ein Vielfaches der Länge des ersten Codes ist.

6. Verfahren nach einem der Ansprüche 1 bis 5, **dadurch gekennzeichnet, dass** das Übertragen mit einer Subträgermodulation das Modulieren des Trägers durch einen oder mehrere Subträger und durch mehrere Entfernungsmesstöne erfolgt.

7. Verfahren nach den Ansprüchen 4 und 6, **dadurch gekennzeichnet, dass** es Folgendes beinhaltet:
- Empfangen, in dem Satelliten, des mit dem zweiten Code gespreizten Entfernungsmesssignals; und
- Modulieren, durch den Satelliten, des Telemetrieträgers, der durch den Telemetriesubträger und durch mehrere Töne in Abhängigkeit von dem empfangenen Entfernungsmesssignal moduliert wurde.

8. Verfahren nach einem der Ansprüche 1 bis 7, **dadurch gekennzeichnet, dass** die Spreizsprektrumsmodulation eine mit einem Gold-Code gespreizte UQPSK-Modulation ist.

9. Verfahren nach einem der Ansprüche 1 bis 8, **dadurch gekennzeichnet, dass** die Subträgermodulation eine PSK/PM-Modulation ist.

10. Satellit, der Folgendes umfasst:
- eine Schaltung (2) zum Empfangen von spreizspektrummodulierten Fernsteuersignalen und von spreizspektrummodulierten Entfernungsmesssignalen, und
- eine Schaltung (22) zum Senden von subträgermodulierten Telemetriesignalen und subträgermodulierten Entfernungsmesssignalen.

11. Satellit nach Anspruch 10, **dadurch gekennzeichnet, dass** die Empfangsschaltung (2) Folgendes umfasst:
- einen Kanal zum Empfangen von durch einen ersten Spreizcode gespreizten Fernsteuersignalen; und
- einen Kanal zum Empfangen von durch einen zweiten Spreizcode gespreizten Entfernungsmesssignalen.

12. Satellit nach Anspruch 11, **dadurch gekennzeichnet, dass** der zweite Code eine Länge von einem Mehrfachen des ersten Codes umfasst, und dadurch, dass der Kanal zum Empfangen von Entfernungsmesssignalen durch den Kanal zum Empfangen von Fernsteuersignalen gesteuert wird.

13. Satellit nach Anspruch 10, 11 oder 12, **dadurch gekennzeichnet, dass** die Sendeschaltung ein Entfernungsmesssignal aussendet.

14. Satellit nach Anspruch 12, **dadurch gekennzeichnet, dass** er eine Verbindungsschaltung (24) aufweist, die die Empfangsschaltung (2) und die Sendeschaltung (22) miteinander verbindet, und dadurch, dass das Entfernungsmesssignal von der Sendeschaltung in Abhängigkeit von den empfangenen Signalen auf dem Kanal zum Empfangen von Entfernungsmesssignalen ausgesendet wird.
